(19) Europäisches Patentamt / European Patent Office / Office européen des brevets

(11) **EP 4 231 197 B1**

(12) **EUROPEAN PATENT SPECIFICATION**

(45) Date of publication and mention of the grant of the patent:
**24.04.2024  Bulletin 2024/17**

(21) Application number: **23167994.5**

(22) Date of filing: **18.07.2017**

(51) International Patent Classification (IPC):
**G06N 3/00** *(2023.01)*        **G06N 3/08** *(2023.01)*

(52) Cooperative Patent Classification (CPC):
**G06N 3/00; G06N 3/084; G06N 3/09; G06N 3/092;**
G06N 3/044; G06N 3/0464

(54) **TRAINING MACHINE LEARNING MODELS ON MULTIPLE MACHINE LEARNING TASKS**

TRAINIEREN VON MASCHINENLERNMODELLEN AUF MEHREREN MASCHINENLERNAUFGABEN

APPRENTISSAGE DE MODÈLES D'APPRENTISSAGE AUTOMATIQUE SUR DE MULTIPLES TÂCHES D'APPRENTISSAGE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2016  US 201662363652 P**

(43) Date of publication of application:
**23.08.2023  Bulletin 2023/34**

(62) Document number(s) of the earlier application(s) in accordance with Art. 76 EPC:
**17745599.5 / 3 485 432**

(73) Proprietor: **DeepMind Technologies Limited**
**London EC4A 3TW (GB)**

(72) Inventors:
• **DESJARDINS, Guillaume**
**London, N1C 4AG (GB)**
• **PASCANU, Razvan**
**London, N1C 4AG (GB)**
• **HADSELL, Raia Thais**
**London, N1C 4AG (GB)**
• **KIRKPATRICK, James**
**London, N1C 4AG (GB)**
• **VENESS, Joel William**
**London, N1C 4AG (GB)**
• **RABINOWITZ, Neil Charles**
**London, N1C 4AG (GB)**

(74) Representative: **Marks & Clerk GST**
**1 New York Street**
**Manchester M1 4HD (GB)**

(56) References cited:
• **Zhizhong Li ET AL: "Learning Without Forgetting" In: "Network and Parallel Computing", 29 June 2016 (2016-06-29), Springer International Publishing, Cham 032548, XP055414041, ISSN: 0302-9743 ISBN: 978-3-540-33183-4 vol. 9908, pages 614-629, DOI: https://arxiv.org/pdf/1606.09282v1.pdf, * the whole document ***
• **R FRENCH: "Catastrophic forgetting in connectionist networks", TRENDS IN COGNITIVE SCIENCES, vol. 3, no. 4, 1 April 1999 (1999-04-01), pages 128-135, XP055106202, ISSN: 1364-6613, DOI: 10.1016/S1364-6613(99)01294-2**
• **JAMES KIRKPATRICK ET AL: "Overcoming catastrophic forgetting in neural networks", PROCEEDINGS NATIONAL ACADEMY OF SCIENCES PNAS, vol. 114, no. 13, 28 March 2017 (2017-03-28), pages 3521-3526, XP055412644, US ISSN: 0027-8424, DOI: 10.1073/pnas.1611835114**

**Description**

BACKGROUND

This specification relates to training machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output. However, machine learning models may be subject to "catastrophic forgetting" when trained on multiple tasks, losing knowledge of a previous task when a new task is learned. Some neural networks are recurrent neural networks. A recurrent neural network is a neural network that receives an input sequence and generates an output sequence from the input sequence. In particular, a recurrent neural network uses some or all of the internal state of the network after processing a previous input in the input sequence in generating an output from the current input in the input sequence.

Li and Hoiem, "Learning Without Forgetting", Network and Parallel Computing, 29 June 2016, Springer, vol. 9908, pages 614-629, describes a method in which two separate fully-connected layers, each with task-specific parameters, operate on features from a convolutional neural network. French, "Catastrophic forgetting in connectionist networks", Trends In Cognitive Sciences, vol. 3, no. 4, 1 April 1999, pages 128-135, provides a general overview of catastrophic inference/catastrophic forgetting in artificial neural networks and the brain.

SUMMARY

This specification describes how a system implemented as computer programs on one or more computers in one or more locations can train a machine learning model on multiple machine learning tasks.

The invention is set out in claim 1; further aspects are set out in the dependent claims.

In general, one innovative aspect may be embodied in a method for training a machine learning model having multiple parameters. The machine learning model has been trained on a first machine learning task to determine first values of the parameters of the machine learning model. The method includes: determining, for each of the plurality of parameters, a respective measure of an importance of the parameter to the machine learning model achieving acceptable performance on the first machine learning task; obtaining training data for training the machine learning model on a second, different machine learning task; and training the machine learning model on the second machine learning task by training the machine learning model on the training data to adjust the first values of the parameters so that the machine learning model achieves an acceptable level of performance on the second machine learning task while maintaining an acceptable level of performance on the first machine learning task, in which, during the training of the machine learning model on the second machine learning task, values of parameters that were more important in the machine learning model achieving acceptable performance on the first machine learning task are more strongly constrained to not deviate from the first values than values of parameters that were less important in the machine learning model achieving acceptable performance on the first machine learning task.

Training the machine learning model on the training data may include: adjusting the first values of the parameters to optimize, more particularly aim to minimize, an objective function that includes: (i) a first term that measures a performance of the machine learning model on the second machine learning task, and (ii) a second term that imposes a penalty for parameter values deviating from the first parameter values, wherein the second term penalizes deviations from the first values more for parameters that were more important in achieving acceptable performance on the first machine learning task than for parameters were less important in achieving acceptable performance on the first machine learning task. The second term may depend on, for each of the plurality of parameters, a product of the respective measure of importance of the parameter and a difference between the current value of the parameter and the first value of the parameter.

In some implementations, the training may implement "elastic weight consolidation" (EWC), in which during training on the second task the parameters are anchored to their first values by an elastic penalty, that is a penalty on adjusting a parameter which increases with increasing distance from the parameter's first value. The stiffness or degree of the elastic penalty may depend upon a measure of the importance of the parameter to the first task, or more generally to any previously learned tasks. Thus the elastic weight consolidation may be implemented as a soft constraint, for example quadratic with increasing distance, such that each weight is pulled back towards its old value(s) by an amount dependent upon, for example proportional to, a measure of its importance on a previously performed task or tasks. In broad terms, the parameters are tempered by a prior which is the posterior distribution on the parameters derived from the previous task(s).

In general, the machine learning model comprises a neural network such as a convolutional neural network or recurrent neural network and the parameters comprise weights of the neural network. The importance of individual parameters (weights) may be determined in a variety of different ways, as described further below. Optionally, the importance of individual parameters (weights) may be recalculated before training on a new task begins.

Training the machine learning model on the training data may include, for each training example in the training data: processing the training example using the machine learning model in accordance with current values of parameters of the machine learning model to determine a model output; determining a gradient of the objective function using the model output, a target output for the training example, the current values of the parameters of the machine learning model, and the first values of the parameters of the machine learning model; and adjusting the current values of the parameters using the gradient to optimize the objective function.

Determining, for each of the plurality of parameters, a respective measure of an importance of the parameter to the machine learning model achieving acceptable performance on the first machine learning task may include: determining, for each of the plurality of parameters, an approximation of a probability that a current value of the parameter is a correct value of the parameter given first training data used to train the machine learning model on the first task.

One way of determining, for each of the plurality of parameters, a respective measure of an importance of the parameter to the machine learning model achieving acceptable performance on the first machine learning task may include: determining a Fisher Information Matrix (FIM) of the plurality of parameters of the machine learning model with respect to the first machine learning task, in which, for each of the plurality of parameters, the respective measure of the importance of the parameter is a corresponding value on a diagonal of the FIM. This is computationally convenient as the FIM can be computed from first order derivatives. For example the FIM may be determined from the covariance of the model log-probabilities with respect to its parameters.

Using the diagonal values of the FIM as an importance measure reduces computational complexity while effectively computing a point-estimate of the variance of a parameter, i.e. the uncertainty of a weight. In some implementations, an estimate of mean and standard deviation (or variance) of weights may be obtained by employing a Bayes by Backprop procedure as described in "Weight Uncertainty in Neural Networks", Blundell et al., ICML (2015). This can be done using a variation of the backpropagation procedure.

In some implementations, the first machine learning task and the second machine learning task are different supervised learning tasks.

In some other implementations, the first machine learning task and the second machine learning tasks are different reinforcement learning tasks. In a reinforcement learning task, the objective function may include a discounted reward term dependent upon an expected reward from taking an action in a state. The machine learning model may be based upon, for example, a Deep Q-Network (DQN), a Double-DQN, an Advantage Actor Critic (A3C) network, or other architectures.

In some implementations, particularly but not exclusively in a reinforcement learning (RL) system, the machine learning tasks may be identified. For example, they may be explicitly labelled or automatically identified, using a model to infer a task. Then one or more penalty terms for the objective function may be selected dependent upon the task identified. When a task switch is identified, the one or more penalty terms may be selected to constrain the parameter learning to be near values learned for one or more previous tasks (according to their importance for the previous task(s) as previously described). The switch may be to a new, previously unseen task, or a return to a previous task. The penalty terms may include constraints for all previously seen tasks except for a current task. The constraints may be quadratic constraints. Optionally the importance of individual parameters (weights) may be recalculated when switching from one learning task to another.

The method may further include: after training the machine learning model on the second machine learning task to determine second values of the parameters of the machine learning model: obtaining third training data for training the machine learning model on a third, different machine learning task; and training the machine learning model on the third machine learning task by training the machine learning model on the third training data to adjust the second values of the parameters so that the machine learning model achieves an acceptable level of performance on the third machine learning task while maintaining an acceptable level of performance on the first machine learning task and the second machine learning task, wherein, during the training of the machine learning model on the third machine learning task, values of parameters that were more important in the machine learning model achieving acceptable performance on the first machine learning task and the second machine learning task are more strongly constrained to not deviate from the second values than values of parameters that were less important in the machine learning model achieving acceptable performance on the first machine learning task and the second machine learning task.

The method may then further comprise determining, for each of the plurality of parameters, a respective measure of an importance of the parameter to the machine learning model achieving acceptable performance on the second machine learning task. Training the machine learning model on the third training data may then include adjusting the second values of the parameters to optimize an objective function including a first term that measures a performance of the machine learning model on the third machine learning task, and a second term that imposes a penalty for parameter values deviating from the second parameter values. In a similar manner to that previously described, the second term may penalize deviations from the second values more for parameters that were more important in achieving acceptable performance on the first machine learning task and the second machine learning than for parameters were less important in achieving acceptable performance on the first machine learning task and the second machine learning task. The second term of the objective function may comprise two separate penalty terms, one for each previous task, or a combined penalty term. For example, where the penalty terms each comprise a quadratic penalty, such as the square of the difference between a parameter and its previous value, the sum of two such penalties may itself be written as a quadratic penalty.

The above aspects can be implemented in any convenient form. For example, aspects and implementations may be implemented by appropriate computer programs which may be carried on appropriate carrier media which may be tangible carrier media (e.g. disks) or intangible carrier media (e.g. communications signals). Aspects may also be implemented using suitable apparatus which may take the form of programmable computers running computer programs.

Particular embodiments of the subject matter described in this specification can be implemented so as to realize one or more of the following advantages. By training the same machine learning model on multiple tasks as described in this specification, once the model has been trained, the model can be used for each of the multiple tasks with an acceptable level of performance. As a result, systems that need to be able to achieve acceptable performance on multiple tasks can do so while using less of their storage capacity and having reduced system complexity. For example, by maintaining a single instance of a model rather than multiple different instances of a model each having different parameter values, only one set of parameters needs to be stored rather than multiple different parameter sets, reducing the amount of storage space required while maintaining acceptable performance on each task. In addition, by training the model on a new task by adjusting values of parameters of the model to optimize an objective function that depends in part on how important the parameters are to previously learned task(s), the model can effectively learn new tasks in succession whilst protecting knowledge about previous tasks.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example of a machine learning system that trains a machine learning model
FIG. 2 is a flow diagram of an example process for training a machine learning model having multiple parameters on multiple tasks.
FIG. 3 is a flow diagram of an example process for training the machine learning model on a third machine learning task after the machine learning model has been trained on a first and second machine learning tasks.

Like reference numbers and designations in the various drawings indicate like elements.

DETAIL DESCRIPTION

This specification describes how a system, e.g., a machine learning system, implemented as computer programs on one or more computers in one or more locations can train a machine learning model on multiple machine learning tasks.

In some cases, the multiple machine learning tasks are different supervised learning tasks. For example, the supervised learning tasks may include different classification tasks, such as image processing tasks, speech recognition tasks, natural language processing tasks, or optical character recognition tasks. For example, the image processing tasks may include different image recognition tasks, where each image recognition task requires the recognition of a different object or pattern in an image. As another example, the speech recognition tasks may include multiple hotword detection tasks, where each task requires the recognition of a different hotword or sequence of hotwords.

In some other cases, the multiple machine learning tasks are different reinforcement learning tasks. For example, the reinforcement learning tasks may include multiple tasks where an agent interacts with different environments or interacts with the same environment to achieve a different goal. For example, the reinforcement learning tasks may include multiple tasks where a computerized agent interacts with multiple different simulated or virtualized environments. As another example, the reinforcement learning tasks may include multiple tasks where a robotic agent interacts with a real-world environment to attempt to achieve different goals. Such a robotic agent may be embodied in a static or moving machine or vehicle.

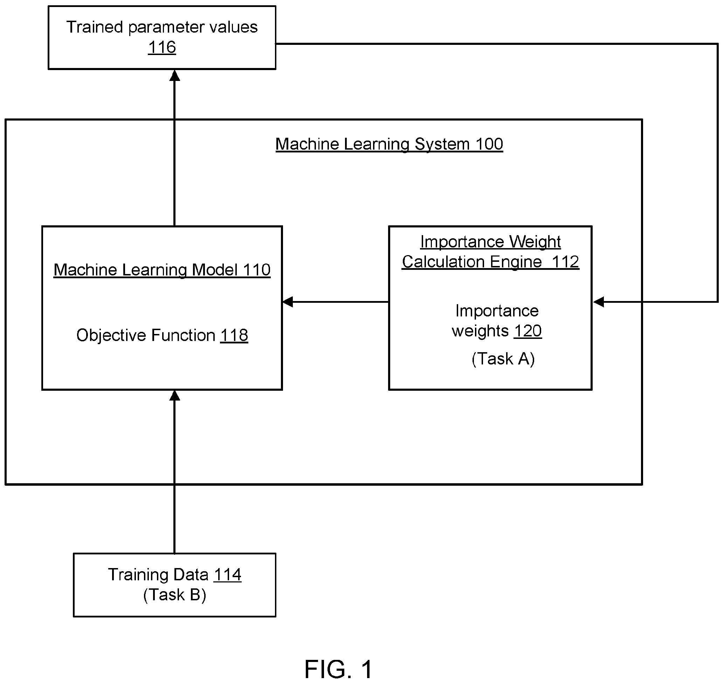

FIG. 1 shows an example machine learning system 100. The machine learning system 100 is an example of a system implemented as computer programs on one or more computers in one or more locations in which the systems, components, and techniques described below are implemented.

The machine learning system 110 is configured to train a machine learning model 110 on multiple machine learning tasks sequentially. The machine learning model 110 can receive an input and generate an output, e.g., a predicted output, based on the received input.

In some cases, the machine learning model 110 is a parametric model having multiple parameters. In these cases, the machine learning model 110 generates the output based on the received input and on values of the parameters of the model 110.

In some other cases, the machine learning model 110 is a deep machine learning model that employs multiple layers of the model to generate an output for a received input. For example, a deep neural network is a deep machine learning model that includes an output layer and one or more hidden layers that each apply a non-linear transformation to a received input to generate an output.

In general, the machine learning system 100 trains the machine learning model 110 on a particular task, i.e., to learn the particular task, by adjusting the values of the parameters of the machine learning model 110 to optimize performance of the model 110 on the particular task, e.g., by optimizing an objective function 118 of the model 110.

The system 100 can train the model 110 to learn a sequence of multiple machine learning tasks. Generally, to allow the machine learning model 110 to learn new tasks without forgetting previous tasks, the system 100 trains the model 110 to optimize the performance of the model 110 on a new task while protecting the performance in previous tasks by constraining the parameters to stay in a region of acceptable performance (e.g., a region of low error) for previous tasks based on information about the previous tasks.

The system 100 determines the information about previous tasks using an importance weight calculation engine 112. In particular, for each task that the model 110 was previously trained on, the engine 112 determines a set of importance weights corresponding to that task. The set of importance weights for a given task generally includes a respective weight for each parameter of the model 110 that represents a measure of an importance of the parameter to the model 110 achieving acceptable performance on the task. The system 100 then uses the sets of importance weights corresponding to previous tasks to train the model 110 on a new task such that the model 110 achieves an acceptable level of performance on the new task while maintaining an acceptable level of performance on the previous tasks.

As shown in FIG.1, given that the model 110 has been trained on a first machine learning task, e.g., task A, using first training data to determine first values of the parameters of the model 110, the importance weight calculation engine 112 determines a set of importance weights 120 corresponding to task A. In particular, the engine 112 determines, for each of the parameters of the model 110, a respective importance weight that represents a measure of an importance of the parameter to the model 110 achieving acceptable performance on task A. Determining a respective importance weight for each of the parameters includes determining, for each of the parameters, an approximation of a probability that a current value of the parameter is a correct value of the parameter given the first training data used to train the machine learning model 110 on task A.

For example, the engine 112 may determine a posterior distribution over possible values of the parameters of the model 110 after the model 110 has been trained on previous training data from previous machine learning task(s). For each of the parameters, the posterior distribution assigns a value to the current value of the parameter in which the value represents a probability that the current value is a correct value of the parameter.

In some implementations, the engine 112 can approximate the posterior distribution using an approximation method, for example, using a Fisher Information Matrix (FIM). The engine 112 can determine an FIM of the parameters of the model 110 with respect to task A in which, for each of the parameters, the respective importance weight of the parameter is a corresponding value on a diagonal of the FIM. That is, each value on the diagonal of the FIM corresponds to a different parameter of the machine learning model 110.

The engine 112 can determine the FIM by computing the second derivative of the objective function 118 at the values of parameters that optimize the objective function 118 with respect to task A. The FIM can also be computed from first-order derivatives alone and is thus easy to calculate even for large machine learning models. The FIM is guaranteed to be positive semidefinite. Computing an FIM is described in more detail in Pascanu R, Bengio Y (2013) "Revisiting natural gradient for deep networks." arXiv: 1301.3584.

After the engine 112 has determined the set of importance weights 120 corresponding to task A, the system 100 can train the model 110 on new training data 114 corresponding to a new machine learning task, e.g. task B.

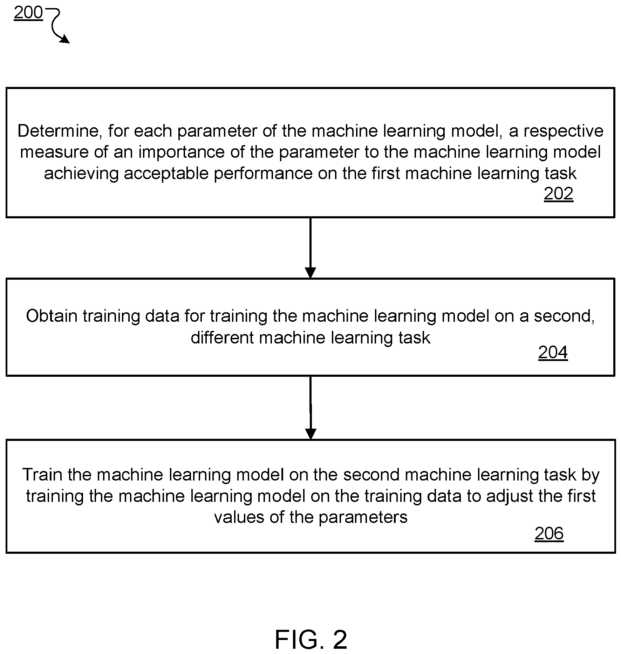

To allow the model 118 to learn task B without forgetting task A, during the training of the model 110 on task B, the system 100 uses the set of importance weights 120 corresponding to task A to form a penalty term in the objective function 118 that aims to maintain an acceptable performance of task A. That is, the model 110 is trained to determine trained parameter values 116 that optimize the objective function 118 with respect to task B and, because the objective function 118 include the penalty term, the model 110 maintains acceptable performance on task A even after being trained on task B. The process for training the model 110 and the objective function 118 are described in more detail below with reference to FIG. 2.

When there are more than two tasks in the sequence of machine learning tasks, e.g., when the model 110 still needs to be trained on a third task, e.g., task C, after being trained on task B, after the trained parameter values 116 for task B have been determined, the machine learning system 100 provides the trained parameter values 116 to the engine 112 so that the engine 112 can determine a new set of importance weights corresponding to task B.

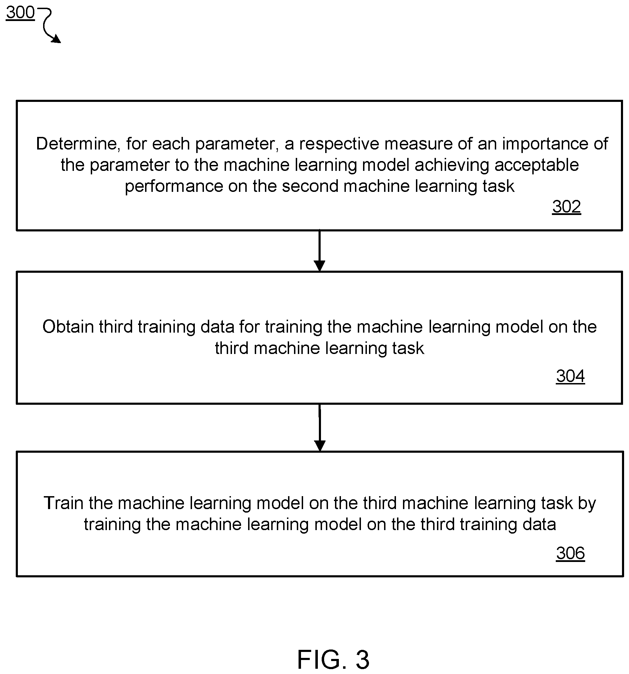

When training the model 110 on task C, the system 100 can train the model 110 to use the set of importance weights corresponding to task A and the new set of importance weights corresponding to task B to form a new penalty term in the objective function 118 to be optimized by the model 110 with respect to task C. The process for training the machine learning model 110 on task C is described in more detail below with reference to FIG. 3. This training process can be repeated until the model 110 has learned all tasks in the sequence of machine learning tasks.

FIG. 2 is a flow diagram of an example process 200 for training a machine learning model having multiple parameters on multiple tasks sequentially.

For convenience, the process 200 will be described as being performed by a system of one or more computers located in one or more locations. For example, a machine learning system, e.g., the machine learning system 100 of FIG. 1, appropriately programmed in accordance with this specification, can perform the process 200.

The machine learning model is a model that has been trained on a first machine learning task to determine first values of the parameters of the machine learning model.

To train the machine learning model on another task, the system first determines, for each of the plurality of parameters, a respective measure of an importance of the parameter (e.g., an importance weight of the parameter) to the machine learning model achieving acceptable performance on the first machine learning task (step 202).

Determining a respective measure of an importance of the parameter includes determining an approximation of a probability that a current value of the parameter is a correct value of the parameter given the first training data used to train the machine learning model on the first machine learning task.

For example, the system may determine a posterior distribution over possible values of the parameters of the model after the model has been trained on previous training data from previous machine learning task(s). For each of the parameters, the posterior distribution assigns a value to the current value of the parameter in which the value represents a probability that the current value is a correct value of the parameter.

In some implementations, the system can approximate the posterior distribution using an approximation method, for example, using a Fisher Information Matrix (FIM). In particular, the system determines a Fisher Information Matrix (FIM) of the parameters of the machine learning model with respect to the first machine learning task in which, for each of the parameters, the respective measure of an importance of the parameter is a corresponding value on a diagonal of the FIM. That is, each value on the diagonal of the FIM corresponds to a different parameter of the machine learning model.

Next, the system obtains new training data for training the machine learning model on a second, different machine learning task (step 204). The new training data includes multiple training examples. Each training example includes a pair of an input example and a target output for the input example.

In some implementations, the first machine learning task and the second machine learning task are different supervised learning tasks. In some other implementations, the first machine learning task and the second machine learning tasks are different reinforcement learning tasks.

The system then trains the machine learning model on the second machine learning task by training the machine learning model on the new training data (step 206).

To allow the machine learning model to learn the second task without forgetting the first task (e.g., by retaining memory about the first task), the system trains the machine learning model on the new training data by adjusting the first values of the parameters to optimize an objective function that depends in part on a penalty term that is based on the determined measures of importance of the parameters to the machine learning model with respect to the first task.

The penalty term penalizes deviations from the first values more for parameters that were more important in achieving acceptable performance on the first machine learning task than for parameters were less important in achieving acceptable performance on the first machine learning task. By adjusting the first values of the parameter to optimize, for example minimize, the objective function, the machine learning model ensures that values of parameters that were more important in the machine learning model achieving acceptable performance on the first machine learning task are more strongly constrained to not deviate from the first values than values of parameters that were less important in the machine learning model achieving acceptable performance on the first machine learning task.

In some implementations, the objective function can be expressed as follows:

$$L(\theta) = L_B(\theta) + \sum_i \frac{\lambda}{2} F_i(\theta_i - \theta_{A,i}^*)^2. \qquad (\text{Eq. 1})$$

The objective function showed in Eq. 1 includes two terms. The first term, $L_B(\theta)$, measures a performance of the machine learning model on the second machine learning task. The first term may be any objective function that is appropriate to the second machine learning task, e.g., cross-entropy loss, mean-squared error, maximum likelihood, a deep Q network's (DQN) objective, and so on. The second term, $\sum_i \frac{\lambda}{2} F_i(\theta_i - \theta_{A,i}^*)^2$, is a penalty term that imposes a penalty for parameter values deviating from the first parameter values. In particular, the penalty term depends on, for each parameter $i$ of the multiple parameters of the machine learning model, a product of (i) the respective measure of importance $F_i$ of the parameter to the machine learning model achieving an acceptable level of performance on the first machine learning task, and (ii) a difference between the current value of the parameter $\theta_i$ and the first value of the parameter $\theta_{A,i}^*$. The second term also depends on $\lambda$, which sets how important the old task (e.g., the first machine learning task) is compared with the new one (e.g., the second machine learning task). The $F_i$ values may represent neural network weight uncertainties and may be derived from the FIM diagonal values or otherwise.

In one approach to adjust the first values of the parameters, the system performs the following iteration for each of multiple training examples in the new training data.

For each training example, the system processes the input example using the machine learning model in accordance with current values of parameters of the machine learning model to determine a model output.

For the first iteration, the current values of parameters are equal to the first values of parameters that were determined after the machine learning model was trained on the first machine learning task.

Next, the system determines a gradient of the objective function using the model output, a target output for the input example, the current values of the parameters of the machine learning model, and the first values of the parameters of the machine learning model.

The system then adjusts the current values of the parameters using the determined gradient to optimize the objective function. The adjusted values of the parameters are then used as current values of the parameters in the next iteration.

In some cases, the system processes the multiple training examples in batches. In these cases, for each batch, the current values are fixed for each training example in the batch. More specifically, the system processes input examples of training examples in each batch using the machine learning model in accordance with current values of parameters of the machine learning model to determine model outputs. The system then determines a gradient of the objective function using the model outputs, target outputs for the input examples in the batch, the current values of the current values of the parameters of the machine learning model, and the first values of the parameters of the machine learning model. The system then adjusts the current values of the parameters using the determined gradient to optimize the objective function. The adjusted values of the parameters are then used as current values of the parameters in the next batch.

After the system performs the above iteration for all training examples in the new training data, the system finishes training the machine learning model on the new training data for the second machine learning task. The current values of the parameters obtained in the final iteration are determined as the trained parameters of the machine learning model with respect to the second machine learning task. Training the model in this way results in trained parameter values that allow the machine learning model to achieve an acceptable level of performance on the second machine learning task while maintaining an acceptable level of performance on the first machine learning task.

Once the system has trained the machine learning model on the second machine learning task, the system can continue to train the machine learning model to achieve an acceptable level of performance on new machine learning tasks while maintaining acceptable performance on tasks on which the model has already been trained.

For example, after training the machine learning model on the second machine learning task to determine second values of the parameters of the machine learning model, the system can continue to train the machine learning model on a third, different machine learning task.

FIG. 3 is a flow diagram of an example process 300 for training the machine learning model on a third machine learning task after the machine learning model has been trained on a first and second machine learning tasks.

For convenience, the process 300 will be described as being performed by a system of one or more computers located in one or more locations. For example, a machine learning system, e.g., the machine learning system 100 of FIG. 1, appropriately programmed in accordance with this specification, can perform the process 300.

The system can optionally determine, for each of the plurality of parameters, a respective measure of an importance of the parameter to the machine learning model achieving acceptable performance on the second machine learning task (step 302).

The system obtains third training data for training the machine learning model on the third machine learning task (step 304).

The system then trains the machine learning model on the third machine learning task by training the machine learning model on the third training data to adjust the second values of the parameters so that the machine learning model achieves an acceptable level of performance on the third machine learning task while maintaining an acceptable level of performance on the first machine learning task and the second machine learning task (step 306). During the training of the machine learning model on the third machine learning task, values of parameters that were more important in the machine learning model achieving acceptable performance on the first machine learning task and the second machine learning task are more strongly constrained to not deviate from the second values than values of parameters that were less important in the machine learning model achieving acceptable performance on the first machine learning task and the second machine learning task.

In some cases, the system trains the machine learning model to adjust the second values of the parameters to obtain third values of the parameters that optimize a new objective function that depends in part on a penalty term that is based on the measures of an importance of the parameters to the machine learning model achieving acceptable performance on the first machine learning task and on the measures of an importance of the parameters to the machine learning model achieving acceptable performance on the second machine learning task.

For example, the new objective function includes: (i) a first term that measures a performance of the machine learning model on the third machine learning task, (ii) a second term that imposes a penalty for parameter values deviating from the first parameter values, in which the second term penalizes deviations from the first values more for parameters that were more important in achieving acceptable performance on the first machine learning task than for parameters were less important in achieving acceptable performance on the first machine learning task, and (iii) a third term that imposes a penalty for parameter values deviating from the second parameter values, in which the third term penalizes deviations from the second values more for parameters that were more important in achieving acceptable performance on the second machine learning task than for parameters were less important in achieving acceptable performance on the second machine learning task.

The second term of the new objective function may depend on, for each of the plurality of parameters, a product of (i) the respective measure of importance of the parameter to the machine learning model achieving acceptable performance on the first machine learning task, and (ii) a difference between the current value of the parameter and the first value of the parameter.

The third term of the new objective function may depend on, for each of the plurality of parameters, a product of (i) the respective measure of importance of the parameter to the machine learning model achieving acceptable performance on the second machine learning task, and (ii) a difference between the current value of the parameter and the second value of the parameter.

The obtained third values of parameters allow the machine learning model to achieve an acceptable level of performance on the third machine learning task while maintaining an acceptable level of performance on the first machine learning task and the second machine learning task.

In some implementations, the objective function can be expressed as follows:

$$L(\theta) = L_B(\theta) + \sum_i \frac{\lambda}{2} F_{A,i}(\theta_i - \theta^*_{A,i})^2 + \sum_i \frac{\lambda}{2} F_{B,i}(\theta_i - \theta^*_{B,i})^2,$$

where $\sum_i \frac{\lambda}{2} F_{A,i}(\theta_i - \theta^*_{A,i})^2$ is a penalty term that imposes a penalty for parameter values deviating from the first parameter values and depends on, for each parameter $i$ of the multiple parameters of the machine learning model, a product of (i) the respective measure of importance $F_{A,i}$ of the parameter to the machine learning model achieving an acceptable level of performance on the first machine learning task, and (ii) a difference between the current value of the parameter $\theta_i$ and the first value of the parameter $\theta^*_{A,i}$. $\sum_i \frac{\lambda}{2} F_{B,i}(\theta_i - \theta^*_{B,i})^2$ is another penalty term that imposes a penalty for parameter values deviating from the second parameter values and depends on, for each parameter $i$ of the multiple parameters of the machine learning model, a product of (i) the respective measure of importance $F_{B,i}$ of the parameter to the machine learning model achieving an acceptable level of performance on the second machine learning task, and (ii) a difference between the current value of the parameter $\theta_i$ and the second value of the parameter $\theta^*_{B,i}$.

A machine learning system implementing the above approach, for example an RL system, may include a system to automatically identify switching between tasks. This may implement an online clustering algorithm trained without supervision. For example, this can be done by modelling a current task as a categorical context $c$ which is treated as the hidden variable of a Hidden Markov Model that explains a current observation. The task context c may condition a generative model predicting the observation probability and new generative models may be added if they explain recent data better than the existing pool of generative models. For example, at the end of each successive time window the model best corresponding to the current task may be selected, and one uninitialized (uniform distribution) model may be made available for selection to create a new generative model and task context.

An RL system implementing the above approach may operate on-policy or off-policy; where operating off-policy a separate experience buffer may be maintained for each identified or inferred task. Optionally neural network gains and biases may be task-specific.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A computer-implemented method of training a machine learning model having a plurality of parameters,

   wherein the machine learning model has been trained on a first machine learning task to determine first values of the parameters of the machine learning model, and
   wherein the method comprises:

   determining, for each of the plurality of parameters, a respective measure of an importance of the parameter to the machine learning model achieving acceptable performance on the first machine learning task;
   obtaining training data for training the machine learning model on a second, different machine learning task; and
   training the machine learning model on the second machine learning task by training the machine learning model on the training data to adjust the first values of the parameters so that the machine learning model achieves an acceptable level of performance on the second machine learning task while maintaining an acceptable level of performance on the first machine learning task,
   wherein, during the training of the machine learning model on the second machine learning task, values of parameters that were more important in the machine learning model achieving acceptable performance on the first machine learning task are more strongly constrained to not deviate from the first values than values of parameters that were less important in the machine learning model achieving acceptable performance on the first machine learning task;

   wherein the machine learning model comprises a deep neural network model that includes an input layer and one or more hidden layers that each apply a non-linear transformation to a received input to generate an output, wherein the machine learning model generates the output based on the received input and on the values of the parameters of the model; and
   wherein the first and second machine learning tasks each comprise a reinforcement learning task in which a robotic agent interacts with a real-world environment to perform the task.

2. The method of claim 1, wherein the robotic agent comprises a static or moving machine or vehicle.

3. The method of any one of claims 1-2, wherein training the machine learning model on the training data comprises: adjusting the first values of the parameters to optimize an objective function that includes:

   (i) a first term that measures a performance of the machine learning model on the second machine learning task, and
   (ii) a second term that imposes a penalty for parameter values deviating from the first parameter values, wherein the second term penalizes deviations from the first values more for parameters that were more important in achieving acceptable performance on the first machine learning task than for parameters were less important in achieving acceptable performance on the first machine learning task.

4. The method of claim 1, 2 or 3, training the machine learning model on the training data includes, for each training example in the training data:

   processing the training example using the machine learning model in accordance with current values of parameters of the machine learning model to determine a model output;
   determining a gradient of an objective function using the model output, a target output for the training example, the current values of the parameters of the machine learning model, and the first values of the parameters of the machine learning model; and
   adjusting the current values of the parameters using the gradient to optimize the objective function; and
   wherein the objective function includes a discounted reward term dependent upon an expected reward from the robotic agent taking an action in a state.

5. The method of claim 3 or 4, wherein training the machine learning model on the training data comprises, for each training example in the training data:

   processing the training example using the machine learning model in accordance with current values of parameters of the machine learning model to determine a model output;

determining a gradient of the objective function using the model output, a target output for the training example, the current values of the parameters of the machine learning model, and the first values of the parameters of the machine learning model; and

adjusting the current values of the parameters using the gradient to optimize the objective function.

6.  The method of any one of claims 3-5, wherein the second term depends on, for each of the plurality of parameters, a product of the respective measure of importance of the parameter and a difference between the current value of the parameter and the first value of the parameter.

7.  The method of any one of claims 1-6, wherein determining, for each of the plurality of parameters, a respective measure of an importance of the parameter to the machine learning model achieving acceptable performance on the first machine learning task comprises:
determining, for each of the plurality of parameters, an approximation of a probability that a current value of the parameter is a correct value of the parameter given first training data used to train the machine learning model on the first task.

8.  The method of any one of claims 1-7, wherein determining, for each of the plurality of parameters, a respective measure of an importance of the parameter to the machine learning model achieving acceptable performance on the first machine learning task comprises:
determining a Fisher Information Matrix (FIM) of the plurality of parameters of the machine learning model with respect to the first machine learning task, wherein, for each of the plurality of parameters, the respective measure of the importance of the parameter is a corresponding value on a diagonal of the FIM.

9.  The method of any one of claims 1-8, further comprising:
after training the machine learning model on the second machine learning task to determine second values of the parameters of the machine learning model:

obtaining third training data for training the machine learning model on a third, different machine learning task; and
training the machine learning model on the third machine learning task by training the machine learning model on the third training data to adjust the second values of the parameters so that the machine learning model achieves an acceptable level of performance on the third machine learning task while maintaining an acceptable level of performance on the first machine learning task and the second machine learning task,
wherein, during the training of the machine learning model on the third machine learning task, values of parameters that were more important in the machine learning model achieving acceptable performance on the first machine learning task and the second machine learning task are more strongly constrained to not deviate from the second values than values of parameters that were less important in the machine learning model achieving acceptable performance on the first machine learning task and the second machine learning task.

10.  The method of claim 9, further comprising:

determining, for each of the plurality of parameters, a respective measure of an importance of the parameter to the machine learning model achieving acceptable performance on the second machine learning task; and
wherein training the machine learning model on the third training data includes adjusting the second values of the parameters to optimize an objective function that includes:

(i) a first term that measures a performance of the machine learning model on the third machine learning task, and
(ii) a second term that imposes a penalty for parameter values deviating from the first parameter values, wherein the second term penalizes deviations from the first values more for parameters that were more important in achieving acceptable performance on the first machine learning task than for parameters were less important in achieving acceptable performance on the first machine learning task.
(iii) a third term that imposes a penalty for parameter values deviating from the second parameter values, wherein the third term penalizes deviations from the second values more for parameters that were more important in achieving acceptable performance on the second machine learning task than for parameters were less important in achieving acceptable performance on the second machine learning task.

11.  The method of claim 10, wherein the second term depends on, for each of the plurality of parameters, a product of (i) the respective measure of importance of the parameter to the machine learning model achieving acceptable performance on the first machine learning task, and (ii) a difference between the current value of the parameter and the first value of the parameter.

12. The method of claim 10, wherein the third term depends on, for each of the plurality of parameters, a product of (i) the respective measure of importance of the parameter to the machine learning model achieving acceptable performance on the second machine learning task, and (ii) a difference between the current value of the parameter and the second value of the parameter.

13. The method of any one of claims 3-8 when dependent upon claim 3, further comprising identifying when switching from one machine learning task to another and updating the second term of the objective function in response, in particular wherein identifying when switching from one machine learning task to another comprises inferring which task is being performed from one or more models.

14. A system comprising one or more computers and one or more storage devices storing instructions that are operable, when executed by the one or more computers, to cause the one or more computers to perform the operations of the respective method of any one of claims 1-13.

15. A computer storage medium encoded with instructions that, when executed by one or more computers, cause the one or more computers to perform the operations of the respective method of any one of claims 1-13.

**Patentansprüche**

1. Computerimplementiertes Verfahren zum Trainieren eines Maschinenlernmodells, das eine Vielzahl von Parametern aufweist, wobei das Maschinenlernmodell an einer ersten Maschinenlernaufgabe trainiert wurde, um erste Werte der Parameter des Maschinenlernmodells zu bestimmen, und wobei das Verfahren Folgendes umfasst:

Bestimmen, für jeden der Vielzahl von Parametern, eines jeweiligen Maßes einer Wichtigkeit des Parameters dafür, dass das Maschinenlernmodell eine akzeptable Leistung bei der ersten Maschinenlernaufgabe erzielt;
Erlangen von Trainingsdaten zum Trainieren des Maschinenlernmodells an einer zweiten, anderen Maschinenlernaufgabe; und
Trainieren des Maschinenlernmodells an der zweiten Maschinenlernaufgabe durch Trainieren des Maschinenlernmodells an den Trainingsdaten, um die ersten Werte der Parameter zu justieren, sodass das Maschinenlernmodell ein akzeptables Leistungsniveau bei der zweiten Maschinenlernaufgabe erzielt, unter Beibehaltung eines akzeptablen Leistungsniveaus bei der ersten Maschinenlernaufgabe, wobei während des Trainierens des Maschinenlernmodells an der zweiten Maschinenlernaufgabe Werte von Parametern, die wichtiger dafür waren, dass das Maschinenlernmodell eine akzeptable Leistung bei der ersten Maschinenlernaufgabe erzielt, stärker dahingehend eingegrenzt werden, dass sie nicht von den ersten Werten abweichen, als Werte von Parametern, die weniger wichtig dafür waren, dass das Maschinenlernmodell eine akzeptable Leistung bei der ersten Maschinenlernaufgabe erzielt;
wobei das Maschinenlernmodell ein tiefes neuronales Netzwerkmodell umfasst, das eine Eingabeschicht und eine oder mehrere verborgene Schichten einschließt, die jeweils eine nicht-lineare Transformation auf eine empfangene Eingabe anwenden, um eine Ausgabe zu erzeugen, wobei das Maschinenlernmodell die Ausgabe basierend auf der empfangenen Eingabe und auf den Werten der Parameter des Modells erzeugt; und
wobei die erste und die zweite Maschinenlernaufgabe jeweils eine Verstärkungslernaufgabe umfassen, in der ein Roboteragent mit einer realen Umgebung interagiert, um die Aufgabe durchzuführen.

2. Verfahren nach Anspruch 1, wobei der Roboteragent ein(e) statische(s) oder sich bewegende(s) Maschine oder Fahrzeug umfasst.

3. Verfahren nach einem der Ansprüche 1 bis 2, wobei das Trainieren des Maschinenlernmodells an den Trainingsdaten Folgendes umfasst:
Justieren der ersten Werte der Parameter, um eine Zielfunktion zu optimieren, die Folgendes einschließt:

(i) einen ersten Term, der eine Leistung des Maschinenlernmodells bei der zweiten Maschinenlernaufgabe misst, und
(ii) einen zweiten Term, der eine Strafe für Parameterwerte verhängt, die von den ersten Parameterwerten abweichen, wobei der zweite Term Abweichungen von den ersten Werten für Parameter, die wichtiger dafür waren, eine akzeptable Leistung bei der ersten Maschinenlernaufgabe zu erzielen, stärker bestraft als für Parameter, die weniger wichtig dafür waren, eine akzeptable Leistung bei der ersten Maschinenlernaufgabe zu erzielen.

4. Verfahren nach Anspruch 1, 2 oder 3, wobei das Trainieren des Maschinenlernmodells an den Trainingsdaten für jedes Trainingsbeispiel in den Trainingsdaten Folgendes einschließt:

Verarbeiten des Trainingsbeispiels unter Verwendung des Maschinenlernmodells gemäß aktuellen Werten von Parametern des Maschinenlernmodells, um eine Modellausgabe zu bestimmen;
Bestimmen eines Gradienten einer Zielfunktion unter Verwendung der Modellausgabe, einer Zielausgabe für das Trainingsbeispiel, der aktuellen Werte der Parameter des Maschinenlernmodells und der ersten Werte der Parameter des Maschinenlernmodells; und
Justieren der aktuellen Werte der Parameter unter Verwendung des Gradienten, um die Zielfunktion zu optimieren; und
wobei die Zielfunktion einen diskontierten Belohnungsterm einschließt, der von einer erwarteten Belohnung durch den Roboteragenten abhängt, der in einem Zustand eine Aktion ausführt.

5. Verfahren nach Anspruch 3 oder 4, wobei das Trainieren des Maschinenlernmodells an den Trainingsdaten für jedes Trainingsbeispiel in den Trainingsdaten Folgendes umfasst:

Verarbeiten des Trainingsbeispiels unter Verwendung des Maschinenlernmodells gemäß aktuellen Werten von Parametern des Maschinenlernmodells, um eine Modellausgabe zu bestimmen;
Bestimmen eines Gradienten der Zielfunktion unter Verwendung der Modellausgabe, einer Zielausgabe für das Trainingsbeispiel, der aktuellen Werte der Parameter des Maschinenlernmodells und der ersten Werte der Parameter des Maschinenlernmodells; und
Justieren der aktuellen Werte der Parameter unter Verwendung des Gradienten, um die Zielfunktion zu optimieren.

6. Verfahren nach einem der Ansprüche 3 bis 5, wobei der zweite Term für jeden der Vielzahl von Parametern von einem Produkt aus dem jeweiligen Maß der Wichtigkeit des Parameters und einer Differenz zwischen dem aktuellen Wert des Parameters und dem ersten Wert des Parameters abhängt.

7. Verfahren nach einem der Ansprüche 1 bis 6, wobei das Bestimmen, für jeden der Vielzahl von Parametern, eines jeweiligen Maßes einer Wichtigkeit des Parameters dafür, dass das Maschinenlernmodell eine akzeptable Leistung bei der ersten Maschinenlernaufgabe erzielt, Folgendes umfasst:
Bestimmen, für jeden der Vielzahl von Parametern, eines Näherungswertes einer Wahrscheinlichkeit, dass ein aktueller Wert des Parameters ein korrekter Wert des Parameters ist, angesichts erster Trainingsdaten, die zum Trainieren des Maschinenlernmodells an der ersten Aufgabe verwendet werden.

8. Verfahren nach einem der Ansprüche 1 bis 7, wobei das Bestimmen, für jeden der Vielzahl von Parametern, eines jeweiligen Maßes einer Wichtigkeit des Parameters dafür, dass das Maschinenlernmodell eine akzeptable Leistung bei der ersten Maschinenlernaufgabe erzielt, Folgendes umfasst:
Bestimmen einer Fisher-Informationsmatrix (FIM) der Vielzahl von Parametern des Maschinenlernmodells in Bezug auf die erste Maschinenlernaufgabe, wobei für jeden der Vielzahl von Parametern das jeweilige Maß der Wichtigkeit des Parameters ein entsprechender Wert auf einer Diagonalen der FIM ist.

9. Verfahren nach einem der Ansprüche 1 bis 8, ferner Folgendes umfassend:
nach dem Trainieren des Maschinenlernmodells an der zweiten Maschinenlernaufgabe, um zweite Werte der Parameter des Maschinenlernmodells zu bestimmen:

Erlangen dritter Trainingsdaten zum Trainieren des Maschinenlernmodells an einer dritten, anderen Maschinenlernaufgabe; und
Trainieren des Maschinenlernmodells an der dritten Maschinenlernaufgabe durch Trainieren des Maschinenlernmodells an den dritten Trainingsdaten, um die zweiten Werte der Parameter zu justieren, sodass das Maschinenlernmodell ein akzeptables Leistungsniveau bei der dritten Maschinenlernaufgabe erzielt, unter Beibehaltung eines akzeptablen Leistungsniveaus bei der ersten Maschinenlernaufgabe und der zweiten Maschinenlernaufgabe, wobei während des Trainierens des Maschinenlernmodells an der dritten Maschinenlernaufgabe Werte von Parametern, die wichtiger dafür waren, dass das Maschinenlernmodell eine akzeptable Leistung bei der ersten Maschinenlernaufgabe und der zweiten Maschinenlernaufgabe erzielt, stärker dahingehend eingegrenzt werden, dass sie nicht von den zweiten Werten abweichen, als Werte von Parametern, die weniger wichtig dafür waren, dass das Maschinenlernmodell eine akzeptable Leistung bei der ersten Maschinenlernaufgabe und der zweiten Maschinenlernaufgabe erzielt.

10. Verfahren nach Anspruch 9, ferner Folgendes umfassend:
Bestimmen, für jeden der Vielzahl von Parametern, eines jeweiligen Maßes einer Wichtigkeit des Parameters dafür, dass das Maschinenlernmodell eine akzeptable Leistung bei der zweiten Maschinenlernaufgabe erzielt; und wobei das Trainieren des Maschinenlernmodells an den dritten Trainingsdaten das Justieren der zweiten Werte der Parameter einschließt, um eine Zielfunktion zu optimieren, die Folgendes einschließt:

(i) einen ersten Term, der eine Leistung des Maschinenlernmodells bei der dritten Maschinenlernaufgabe misst, und

(ii) einen zweiten Term, der eine Strafe für Parameterwerte verhängt, die von den ersten Parameterwerten abweichen, wobei der zweite Term Abweichungen von den ersten Werten für Parameter, die wichtiger dafür waren, eine akzeptable Leistung bei der ersten Maschinenlernaufgabe zu erzielen, stärker bestraft als für Parameter, die weniger wichtig dafür waren, eine akzeptable Leistung bei der ersten Maschinenlernaufgabe zu erzielen.

(iii) einen dritten Term, der eine Strafe für Parameterwerte verhängt, die von den zweiten Parameterwerten abweichen, wobei der dritte Term Abweichungen von den zweiten Werten für Parameter, die wichtiger dafür waren, eine akzeptable Leistung bei der zweiten Maschinenlernaufgabe zu erzielen, stärker bestraft als für Parameter, die weniger wichtig dafür waren, eine akzeptable Leistung bei der zweiten Maschinenlernaufgabe zu erzielen.

11. Verfahren nach Anspruch 10, wobei der zweite Term für jeden der Vielzahl von Parametern von einem Produkt aus (i) dem jeweiligen Maß der Wichtigkeit des Parameters dafür, dass das Maschinenlernmodell eine akzeptable Leistung bei der ersten Maschinenlernaufgabe erzielt, und (ii) einer Differenz zwischen dem aktuellen Wert des Parameters und dem ersten Wert des Parameters abhängt.

12. Verfahren nach Anspruch 10, wobei der dritte Term für jeden der Vielzahl von Parametern von einem Produkt aus (i) dem jeweiligen Maß der Wichtigkeit des Parameters dafür, dass das Maschinenlernmodell eine akzeptable Leistung bei der zweiten Maschinenlernaufgabe erzielt, und (ii) einer Differenz zwischen dem aktuellen Wert des Parameters und dem zweiten Wert des Parameters abhängt.

13. Verfahren nach einem der Ansprüche 3 bis 8, wenn abhängig von Anspruch 3, ferner das Ermitteln umfassend, wann von einer Maschinenlernaufgabe zu einer anderen umzuschalten und der zweite Term der Zielfunktion als Reaktion zu aktualisieren ist, insbesondere wobei das Ermitteln, wann von einer Maschinenlernaufgabe zu einer anderen umzuschalten ist, das Schlussfolgern aus einem oder mehreren Modellen umfasst, welche Aufgabe gerade durchgeführt wird.

14. System, umfassend einen oder mehrere Computer und eine oder mehrere Speichervorrichtungen, die Anweisungen speichern, die dazu dienen, bei Ausführung durch den einen oder die mehreren Computer den einen oder die mehreren Computer zu veranlassen, die Operationen des jeweiligen Verfahrens nach einem der Ansprüche 1 bis 13 durchzuführen.

15. Computerspeichermedium, das mit Anweisungen codiert ist, die bei Ausführung durch einen oder mehrere Computer den einen oder die mehreren Computer dazu veranlassen, die Operationen des jeweiligen Verfahrens nach einem der Ansprüche 1 bis 13 durchzuführen.

**Revendications**

1. Procédé mis en oeuvre par ordinateur de formation d'un modèle d'apprentissage machine présentant une pluralité de paramètres, dans lequel le modèle d'apprentissage machine a été formé sur une première tâche d'apprentissage machine pour déterminer des premières valeurs des paramètres du modèle d'apprentissage machine, et dans lequel le procédé comprend :

la détermination, pour chacun de la pluralité de paramètres, d'une mesure respective d'une importance du paramètre pour que le modèle d'apprentissage machine atteigne une performance acceptable sur la première tâche d'apprentissage machine ;

l'obtention de données de formation pour former le modèle d'apprentissage machine sur une deuxième tâche d'apprentissage machine différente ; et

la formation du modèle d'apprentissage machine sur la deuxième tâche d'apprentissage machine en formant le modèle d'apprentissage machine sur les données de formation pour ajuster les premières valeurs des paramètres de sorte que le modèle d'apprentissage machine atteigne un niveau de performance acceptable sur la deuxième tâche d'apprentissage machine tout en maintenant un niveau de performance acceptable sur la première tâche d'apprentissage machine, dans lequel, pendant la formation du modèle d'apprentissage machine sur la deuxième tâche d'apprentissage machine, des valeurs de paramètres qui étaient plus importants pour que le modèle d'apprentissage machine atteigne une performance acceptable sur la première tâche d'apprentissage machine sont contraintes plus fortement pour ne pas s'écarter des premières valeurs que des valeurs de paramètres qui étaient moins importants pour que le modèle d'apprentissage machine atteigne une performance acceptable sur la première tâche d'apprentissage machine ;

dans lequel le modèle d'apprentissage machine comprend un modèle de réseau de neurones profonds qui inclut une couche d'entrée et une ou plusieurs couches cachées qui appliquent chacune une transformation non linéaire à une entrée reçue pour générer une sortie, dans lequel le modèle d'apprentissage machine génère la sortie sur la base de l'image d'entrée reçue et des valeurs des paramètres du modèle ; et

dans lequel les première et deuxième tâches d'apprentissage machine comprennent chacune une tâche d'apprentissage par renforcement dans laquelle un agent robotique interagit avec un environnement du monde réel pour réaliser la tâche.

2. Procédé selon la revendication 1, dans lequel l'agent robotique comprend une machine ou un véhicule statique ou en mouvement.

3. Procédé selon l'une quelconque des revendications 1 à 2, dans lequel la formation du modèle d'apprentissage machine sur les données de formation comprend :

l'ajustement des premières valeurs des paramètres pour optimiser une fonction d'objectif qui inclut :

(i) un premier terme qui mesure une performance du modèle d'apprentissage machine sur la deuxième tâche d'apprentissage machine, et

(ii) un deuxième terme qui impose une pénalité pour des valeurs de paramètres s'écartant des premières valeurs de paramètres, dans lequel le deuxième terme pénalise des écarts par rapport aux premières valeurs davantage pour des paramètres qui étaient plus importants dans l'atteinte d'une performance acceptable sur la première tâche d'apprentissage machine que pour des paramètres qui étaient moins importants dans l'atteinte d'une performance acceptable sur la première tâche d'apprentissage machine.

4. Procédé selon la revendication 1, 2 ou 3, dans lequel la formation du modèle d'apprentissage machine sur les données de formation inclut, pour chaque exemple de formation dans les données de formation :

le traitement de l'exemple de formation à l'aide du modèle d'apprentissage machine conformément à des valeurs actuelles de paramètres du modèle d'apprentissage machine pour déterminer une sortie de modèle ;

la détermination d'un gradient d'une fonction d'objectif à l'aide de la sortie de modèle, d'une sortie cible pour l'exemple de formation, des valeurs actuelles des paramètres du modèle d'apprentissage machine, et des premières valeurs des paramètres du modèle d'apprentissage machine ; et

l'ajustement des valeurs actuelles des paramètres à l'aide du gradient pour optimiser la fonction d'objectif ; et

dans lequel la fonction d'objectif inclut un terme de récompense actualisé qui dépend d'une récompense attendue de l'agent robotique qui prend une action dans un état.

5. Procédé selon la revendication 3 ou 4, dans lequel la formation du modèle d'apprentissage machine sur les données de formation comprend, pour chaque exemple de formation dans les données de formation :

le traitement de l'exemple de formation à l'aide du modèle d'apprentissage machine conformément à des valeurs actuelles de paramètres du modèle d'apprentissage machine pour déterminer une sortie de modèle ;

la détermination d'un gradient de la fonction d'objectif à l'aide de la sortie de modèle, d'une sortie cible pour l'exemple de formation, des valeurs actuelles des paramètres du modèle d'apprentissage machine, et des premières valeurs des paramètres du modèle d'apprentissage machine ; et

l'ajustement des valeurs actuelles des paramètres à l'aide du gradient pour optimiser la fonction d'objectif.

6. Procédé selon l'une quelconque des revendications 3 à 5, dans lequel le deuxième terme dépend, pour chacun de la pluralité de paramètres, d'un produit de la mesure respective d'importance du paramètre et d'une différence entre la valeur actuelle du paramètre et la première valeur du paramètre.

7. Procédé selon l'une quelconque des revendications 1 à 6, dans lequel la détermination, pour chacun de la pluralité de paramètres, d'une mesure respective d'une importance du paramètre pour que le modèle d'apprentissage machine atteigne une performance acceptable sur la première tâche d'apprentissage machine comprend :
la détermination, pour chacun de la pluralité de paramètres, d'une approximation d'une probabilité qu'une valeur actuelle du paramètre soit une valeur correcte du paramètre étant donné des premières données de formation utilisées pour former le modèle d'apprentissage machine sur la première tâche.

8. Procédé selon l'une quelconque des revendications 1 à 7, dans lequel la détermination, pour chacun de la pluralité de paramètres, d'une mesure respective d'une importance du paramètre pour que le modèle d'apprentissage machine atteigne une performance acceptable sur la première tâche d'apprentissage machine comprend :
la détermination d'une matrice d'information de Fisher (FIM) de la pluralité de paramètres du modèle d'apprentissage machine par rapport à la première tâche d'apprentissage machine, dans lequel, pour chacun de la pluralité de paramètres, la mesure respective de l'importance du paramètre est une valeur correspondante sur une diagonale de la FIM.

9. Procédé selon l'une quelconque des revendications 1 à 8, comprenant en outre :
après la formation du modèle d'apprentissage machine sur la deuxième tâche d'apprentissage machine pour déterminer des deuxièmes valeurs des paramètres du modèle d'apprentissage machine :

l'obtention de troisièmes données de formation pour former le modèle d'apprentissage machine sur une troisième tâche d'apprentissage machine différente ; et
la formation du modèle d'apprentissage machine sur la troisième tâche d'apprentissage machine en formant le modèle d'apprentissage machine sur les troisièmes données de formation pour ajuster les deuxièmes valeurs des paramètres de sorte que le modèle d'apprentissage machine atteigne un niveau de performance acceptable sur la troisième tâche d'apprentissage machine tout en maintenant un niveau de performance acceptable sur la première tâche d'apprentissage machine et la deuxième tâche d'apprentissage machine, dans lequel, pendant la formation du modèle d'apprentissage machine sur la troisième tâche d'apprentissage machine, des valeurs de paramètres qui étaient plus importants pour que le modèle d'apprentissage machine atteigne une performance acceptable sur la première tâche d'apprentissage machine et la deuxième tâche d'apprentissage machine sont contraintes plus fortement pour ne pas s'écarter des deuxièmes valeurs que des valeurs de paramètres qui étaient moins importants pour que le modèle d'apprentissage machine atteigne une performance acceptable sur la première tâche d'apprentissage machine et la deuxième tâche d'apprentissage machine.

10. Procédé selon la revendication 9, comprenant en outre :
la détermination, pour chacun de la pluralité de paramètres, d'une mesure respective d'une importance du paramètre pour que le modèle d'apprentissage machine atteigne une performance acceptable sur la deuxième tâche d'apprentissage machine ; et dans lequel la formation du modèle d'apprentissage machine sur les troisièmes données de formation inclut l'ajustement des deuxièmes valeurs des paramètres pour optimiser une fonction d'objectif qui inclut :

(i) un premier terme qui mesure une performance du modèle d'apprentissage machine sur la troisième tâche d'apprentissage machine, et
(ii) un deuxième terme qui impose une pénalité pour des valeurs de paramètres s'écartant des premières valeurs de paramètres, dans lequel le deuxième terme pénalise des écarts par rapport aux premières valeurs davantage pour des paramètres qui étaient plus importants dans l'atteinte d'une performance acceptable sur la première tâche d'apprentissage machine que pour des paramètres qui étaient moins importants dans l'atteinte d'une performance acceptable sur la première tâche d'apprentissage machine.
(iii) un troisième terme qui impose une pénalité pour des valeurs de paramètres s'écartant des deuxièmes valeurs de paramètres, dans lequel le troisième terme pénalise des écarts par rapport aux deuxièmes valeurs davantage pour des paramètres qui étaient plus importants dans l'atteinte d'une performance acceptable sur la deuxième tâche d'apprentissage machine que pour des paramètres qui étaient moins importants dans l'atteinte d'une performance acceptable sur la deuxième tâche d'apprentissage machine.

11. Procédé selon la revendication 10, dans lequel le deuxième terme dépend, pour chacun de la pluralité de paramètres, d'un produit (i) de la mesure respective d'importance du paramètre pour que le modèle d'apprentissage machine atteigne une performance acceptable sur la première tâche d'apprentissage machine, et (ii) d'une différence entre la valeur actuelle du paramètre et la première valeur du paramètre.

12. Procédé selon la revendication 10, dans lequel le troisième terme dépend, pour chacun de la pluralité de paramètres, d'un produit (i) de la mesure respective d'importance du paramètre pour que le modèle d'apprentissage machine atteigne une performance acceptable sur la deuxième tâche d'apprentissage machine, et (ii) d'une différence entre la valeur actuelle du paramètre et la deuxième valeur du paramètre.

13. Procédé selon l'une quelconque des revendications 3 à 8, lorsqu'elles dépendent de la revendication 3, comprenant en outre l'identification du moment du passage d'une tâche d'apprentissage machine à une autre et la mise à jour du deuxième terme de la fonction d'objectif en réponse, en particulier dans lequel l'identification du moment du passage d'une tâche d'apprentissage machine à une autre comprend la déduction de la tâche qui est en train d'être réalisée à partir d'un ou plusieurs modèles.

14. Système comprenant un ou plusieurs ordinateurs et un ou plusieurs dispositifs de stockage stockant des instructions qui sont exploitables, lorsqu'elles sont exécutées par les un ou plusieurs ordinateurs, pour amener les un ou plusieurs ordinateurs à réaliser les opérations du procédé respectif selon l'une quelconque des revendications 1 à 13.

15. Support de stockage sur ordinateur codé avec des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.

Trained parameter values
116

Machine Learning System 100

Machine Learning Model 110

Objective Function 118

Importance Weight
Calculation Engine 112

Importance
weights 120

(Task A)

Training Data 114
(Task B)

FIG. 1

200

Determine, for each parameter of the machine learning model, a respective measure of an importance of the parameter to the machine learning model achieving acceptable performance on the first machine learning task
202

Obtain training data for training the machine learning model on a second, different machine learning task
204

Train the machine learning model on the second machine learning task by training the machine learning model on the training data to adjust the first values of the parameters
206

FIG. 2

300

Determine, for each parameter, a respective measure of an importance of the parameter to the machine learning model achieving acceptable performance on the second machine learning task

302

Obtain third training data for training the machine learning model on the third machine learning task

304

Train the machine learning model on the third machine learning task by training the machine learning model on the third training data

306

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning Without Forgetting. **LI ; HOIEM.** Network and Parallel Computing. Springer, 29 June 2016, vol. 9908, 614-629
- Catastrophic forgetting in connectionist networks. *Trends In Cognitive Sciences,* 01 April 1999, vol. 3, 128-135

- **BLUNDELL et al.** Weight Uncertainty in Neural Networks. *ICML,* 2015
- **PASCANU R ; BENGIO Y.** Revisiting natural gradient for deep networks. *arXiv: 1301.3584.,* 2013